# EUROPEAN PATENT APPLICATION

(11) **EP 4 521 601 A1**
(43) Date of publication of application: **12.03.2025**
(21) Application number: 23799414.0
(22) Date of filing: 23.03.2023
(51) Int. Cl.: H02J 50/90, H02J 7/00, H02J 50/12, H02J 50/40, H02J 50/80

(54) **NONCONTACT POWER FEEDING SYSTEM AND NONCONTACT POWER FEEDING APPARATUS**

(30) Priority: 06.05.2022 JP 2022076577
(71) Applicant: DENSO CORPORATION, Kariya-city, Aichi 448-8661 (JP); TOYOTA JIDOSHA KABUSHIKI KAISHA, Toyota-shi Aichi 471-8571 (JP)
(72) Inventor: SHIBANUMA, Mitsuru, Kariya- city, Aichi 4488661 (JP); OBAYASHI, Kazuyoshi, Kariya- city, Aichi 4488661 (JP); YAMAGUCHI, Nobuhisa, Kariya- city, Aichi 4488661 (JP); CHO, Sungmin, Toyota-shi, Aichi 471-8571 (JP); KOBAYASHI, Katsuya, Toyota-shi, Aichi 471-8571 (JP); HASHIMOTO, Toshiya, Toyota-shi, Aichi 471-8571 (JP)
(74) Representative: TBK
(86) International application number: PCT/JP2023/011566
(87) International publication number: WO 2023/214482

(57) **Abstract**

A wireless power transfer system (10) comprises: a power conversion unit (120) that generates power to be transmitted to a power reception coil (211); a power transmission unit group (G1) that is constituted by two or more power transmission units (110), each of the power transmission units having a power transmission circuit including a power transmission coil (111); a control unit (130) that controls a supply of power from the power conversion unit to the power transmission unit group; and a position detection unit (80) that detects a position of a mobile body. The control unit, based on position information indicating the position of the mobile body detected by the position detection unit, causes power to be supplied from the power conversion unit to a power transmission unit group that satisfies a power transmission condition, the power transmission condition including that a distance of the power transmission coil relative to the power reception coil of the mobile body is less than or equal to a predetermined threshold value, and does not cause power to be supplied from the power conversion unit to a power transmission unit group that does not satisfy the power transmission condition.

## Description

### [Cross Reference to Related Applications]

This application claims the benefit of the priority to Japanese Patent Application No. 2022-76577 filed May 6, 2022, the entire contents of which are incorporated herein by reference.

### [Technical Field]

The present disclosure relates to a wireless power transfer system and a wireless power transfer apparatus.

### [Background Art]

PTL 1 describes a technique that relates to a wireless power transfer apparatus that supplies power from a power transmission coil to a power reception coil installed in a mobile body. In the technique described in PTL 1, when the power transmission coil is not opposing the power reception coil, an input impedance of a power transmission resonant circuit including the power transmission coil is set so as to be small, and when the power transmission coil is opposing the power reception coil, the input impedance of the power transmission resonant circuit is set so as to be large. As a result, when the power transmission coil is not opposing the power reception coil, power is not supplied from the power transmission coil to a power transfer coil.

### [Citation List]

### [Patent Literature]

PTL 1: JP 2021-23094 A

### [Summary of the Invention]

In the technique described in PTL 1, although the supply of power from the power transmission coil to the power reception coil is suppressed when the power transmission coil and the power reception coil are not opposing each other, the supply of current from a power transmission circuit to the power transmission coil is not actually completely stopped. In other words, in the technique described in PTL 1, there is a standby current that constantly flows to each power transmission coil, even when the power transmission coil is not opposing the power reception coil. Such a standby current increases as the number of power transmission coils increases.

The present disclosure can be realized as the following aspects.

According to an aspect of the present disclosure, a wireless power transfer system is provided. This wireless power transfer system supplies power to a mobile body provided with a power reception unit including a power reception coil. This wireless power transfer system includes: a power conversion unit configured to generate power to be transmitted to a power reception coil; one or more power transmission unit groups that are each constituted by two or more power transmission units, each of the power transmission units having a power transmission circuit including a power transmission coil, and each of the power transmission units receiving a supply of power from the power conversion unit and transmitting power from the power transmission coil to the power reception coil; a control unit configured to control the supply of power from the power conversion unit to the one or more power transmission unit groups; and one or more position detection units configured to detect a position of a mobile body. The control unit is configured to, based on position information indicating the position of the mobile body detected by the one or more position detection units, cause power to be supplied from the power conversion unit to a power transmission unit group that satisfies a power transmission condition among the one or more power transmission unit groups, the power transmission condition including that a distance of the power transmission coil relative to the power reception coil of the mobile body is less than or equal to a predetermined threshold value, and not cause power to be supplied from the power conversion unit to a power transmission unit group that does not satisfy the power transmission conditions among the one or more power transmission unit groups.

According to such an aspect, because the supply of power from the power conversion unit is controlled so as to be supplied or stopped depending on whether the power transmission conditions, which include that the distance of the power transmission coil relative to the power reception coil is less than or equal to the predetermined threshold, are satisfied, the standby current that constantly flows to the power transmission coils can be reduced compared to a form in which the input impedance of a resonant circuit for power transmission is controlled.

According to another aspect of the present disclosure, a wireless power transfer apparatus is provided. This wireless power transfer apparatus supplies power to a mobile body (200) provided with a power reception unit (210) including a power reception coil (211). This wireless power transfer apparatus includes: a power conversion unit (120) configured to generate power to be transmitted to a power reception coil; one or more power transmission unit groups (G1) that are each constituted by two or more power transmission units (110), each of the power transmission units having a power transmission circuit including a power transmission coil (111), and each of the power transmission units receiving a supply of power from the power conversion unit and transmitting power from the power transmission coil to the power reception coil; a control unit (130) configured to control the supply of power from the power conversion unit to the one or more power transmission unit groups; and one or more position detection units (80) configured to detect a position of the mobile body. The control unit is configured to, based on position information indicating the position of the mobile body detected by the one or more position detection units, cause power to be supplied from the power conversion unit to a power transmission unit group that satisfies a power transmission condition among the one or more power transmission unit groups, the power transmission condition including that a distance of the power transmission coil relative to the power reception coil of the mobile body is less than or equal to a predetermined threshold value, and not cause power to be supplied from the power conversion unit to a power transmission unit group that does not satisfy the power transmission condition among the one or more power transmission unit groups.

According to such an aspect, because the supply of power from the power conversion unit is controlled so as to be supplied or stopped depending on whether the power transmission conditions, which include that the distance of the power transmission coil relative to the power reception coil is less than or equal to the predetermined threshold, are satisfied, the standby current that constantly flows to the power transmission coils can be reduced compared to a form in which the input impedance of a resonant circuit for power transmission is controlled.

### [Brief Description of the Drawings]

The above object and other objects, features, and advantages of the present disclosure will become more apparent from the following detailed description, which is made with reference to the accompanying drawings. In the drawings:
Fig. 1 is a diagram showing a schematic configuration of a power transfer system,
Fig. 2 is a diagram showing an outline of a circuit configuration of a power transfer apparatus and a small mobility device,
Fig. 3 is a diagram for describing an opposing state and non-opposing state of the coils,
Fig. 4 is a diagram showing an outline of a circuit configuration of a power transfer apparatus and a small mobility device according to a second embodiment,
Fig. 5 is a diagram showing an arrangement of a plurality of power transmission unit groups, and
Fig. 6 is a diagram showing small mobility devices traveling within a factory where robots are in operation.

### [Description of the Embodiments]

### A1. First Embodiment

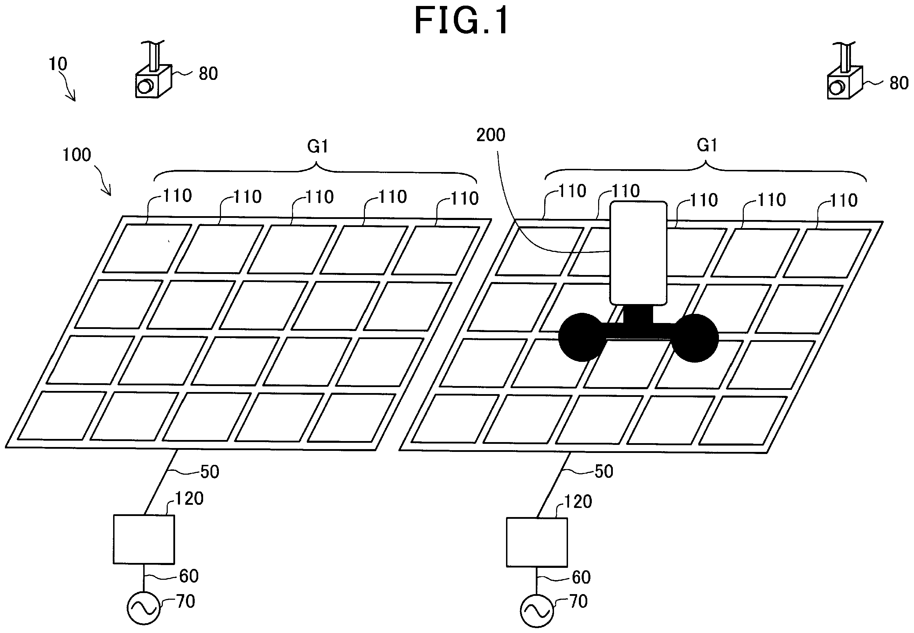

As shown in Fig. 1, a power transfer system 10 wirelessly transmits power to a small mobility device 200, which is a mobile body. The small mobility device 200 is, for example, a transport apparatus that transports parts in a factory. The power transfer system 10 is also referred to as a wireless power transfer system. The power transfer system 10 includes a power transfer apparatus 100, transmission lines 50, lines 60, power sources 70, and sensors 80.

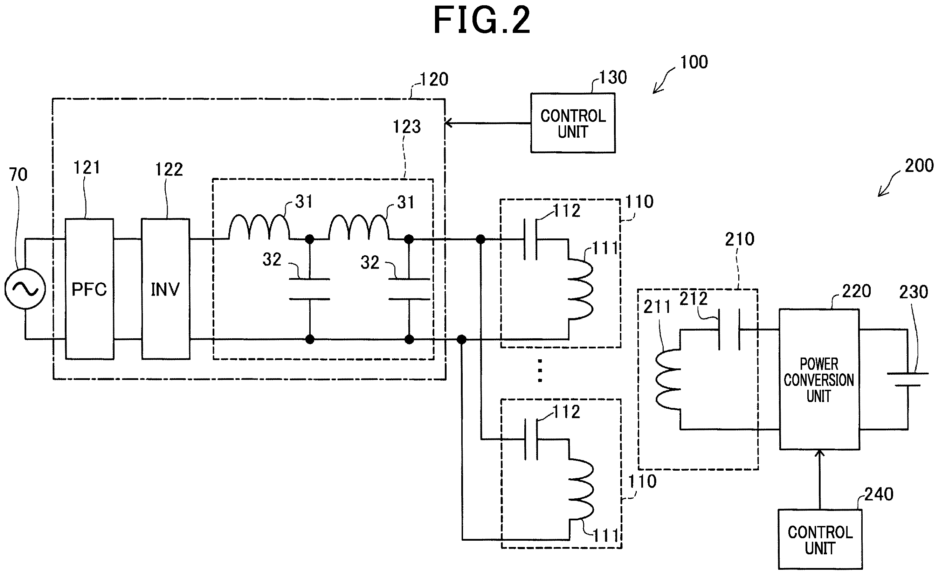

As shown in Fig. 2, the power transfer apparatus 100 includes a plurality of power transmission coil units 110, a plurality of power conversion units 120, and a control unit 130. The power transfer apparatus 100 is also referred to as a wireless power transfer apparatus.

The power transmission coil units 110 supply the power that has been supplied from a power conversion unit 120 to a power reception coil unit 210 provided in the small mobility device 200. The power transmission coil units 110 are also referred to as power transmission units. As shown in Fig. 1, in the first embodiment, in a portion of the movement range of the small mobility device 200, the plurality of power transmission coil units 110 provided in the power transfer apparatus 100 are embedded in or laid out on a floor surface. In the embodiment, the floor surface is assumed to be a surface that is parallel to a horizontal plane, or a surface that is within plus or minus 10 degrees of the horizontal plane. Hereinafter, a plurality of power transmission coil units 110 are sometimes collectively referred to as a power transmission unit group G1. In the example shown in Fig. 1, 20 power transmission coil units 110 that are arranged in 4 rows and 5 columns form a single power transmission unit group G1, and two power transmission unit groups G1 are illustrated. The power transmission unit groups G1 are each connected in parallel to a power conversion unit 120 via a transmission line 50.

As shown in Fig. 2, each of the power transmission coil units 110 include a power transmission coil 111 and a capacitor 112 that are connected in series. The power transmission coil 111, with the capacitor 112, constitute a power transmission resonant circuit. A power transmission resonant circuit is also referred to as a power transmission circuit.

The power conversion unit 120 generates the power to be transmitted to the power reception coil unit 210. The power conversion unit 120 includes a power factor correction circuit 121, an inverter circuit 122, and a filter 123. The power factor correction circuit 121 rectifies and boosts the AC power supplied from the power source 70, converts the power into DC power, and corrects the power factor of the power transfer apparatus 100 serving as a load. The inverter circuit 122 converts the DC power generated by the power factor correction circuit 121 into AC power of a desired frequency, and supplies the AC power to the power transmission coil units 110. The inverter circuit 122 includes, for example, a full-bridge circuit configured by four switching transistors. The four switching transistors included in the inverter circuit 122 are turned on or off under the control of the control unit 130, thereby switching between supplying and stopping the supply of AC power to the power transmission coil units 110. The filter 123 passes only AC power that is in a predetermined frequency band out of the AC power that is input from the inverter circuit 122. The filter 123 includes a fourth-order filter consisting of coils 31 and capacitors 32.

The control unit 130 controls the inverter circuit 122 of the power conversion unit 120 such that AC power of a desired frequency is supplied to the power transmission coil units 110. Furthermore, the control unit 130 controls the inverter circuit 122 of the power conversion unit 120 such that the supply of AC power to the power transmission coil units 110 is stopped. The functions of the control unit 130 are realized by a microcomputer including, for example, a processor and memory. The conditions under which the control unit 130 controls the inverter circuit 122 to supply power to the power transmission coil units 110 will be described later.

The transmission lines 50 shown in Fig. 1 are lines that connect the power conversion units 120 and the power transmission unit groups G1. The lines 60 are lines that connect the power sources 70 and the power transfer apparatus 100. The power sources 70 are AC power sources that supply AC power to the power conversion units 120.

The sensors 80 are position detectors that are used by the control unit 130 to detect the position of the small mobility device 200. The sensors 80 are, for example, cameras arranged near the area in which the power transmission coil units 110 are installed. For example, the sensors 80 capture images of the power transmission coil units 110 at predetermined time intervals, and transmit the captured image data to the control unit 130 via communications. The sensors 80 are also referred to as position detection units.

The small mobility device 200 includes a power reception coil unit 210, a power conversion unit 220, a battery 230, and a control unit 240. The small mobility device 200 travels using, as a power source, a motor driven by power charged in the battery 230.

The power reception coil unit 210 receives a supply of power from the power transmission coil units 110. The power reception coil unit 210 includes a power reception coil 211 and a capacitor 212 that are connected in series. The power reception coil unit 210 is also referred to as a power reception unit. The power reception coil 211, with the capacitor 212, constitute a power reception resonant circuit. As shown in Fig. 1, when the small mobility device 200 is stopped on a power reception coil unit 110, the power reception coil 211 of the power reception coil unit 210 is arranged so as to oppose the power transmission coil 111 of the power transmission coil unit 110.

As shown in Fig. 2, when the power reception coil 211 and the power transmission coil 111 of a power transmission coil unit 110 are opposing each other, and an AC voltage is applied to the power transmitting coil 111 such that an AC current flows through the power transmission coil 111, a magnetic flux is induced in the power transmission coil 111. As a result of a linkage of the induced magnetic flux with the power reception coil 211, the power reception coil 211 receives power from the power transmission coil 111. The power conversion unit 220 is connected to the power reception coil unit 210.

The power conversion unit 220 rectifies the electromotive force induced in the power reception coil 211 to generate DC power. The generated DC power is supplied to the battery 230. The battery 230 stores the DC power supplied from the power transfer apparatus 100. The control unit 240 controls each unit of the small mobility device 200. For example, when a supply of power is received, the control unit 240 controls the power conversion unit 220 to receive the power.

A condition under which the control unit 130 causes the power conversion unit 120 to supply power to the power transmission coil units 110 will be described below. The condition is referred to as a power transmission condition. In the first embodiment, the power transmission condition is assumed to be that the distance of a power transmission coil 111 relative to the power reception coil 211 is less than or equal to a predetermined threshold. The control unit 130 supplies power to a power transmission unit group G1 containing a power transmission coil 111 that satisfies the power transmission condition by controlling the inverter circuit 122 of the power conversion unit 120.

On the other hand, when none of the power transmission coils 111 contained in a power transmission unit group G1 satisfy the power transmission condition, the control unit 130 controls the inverter circuit 122 of the power conversion unit 120 such that power is not supplied to the power transmission unit group G1.

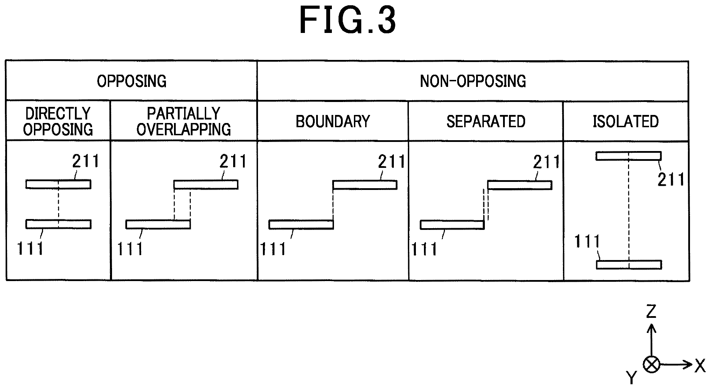

Here, as shown in Fig. 3, an "opposing state" in which the power transmission coil 111 and the power reception coil 211 are opposing each other, includes a "directly opposing state" and a "partially overlapping state". The coil surfaces are parallel to the X axis and the Y axis. The direction which is perpendicular to the coil surfaces is the Z axis. Note that the coil surfaces are surfaces that are surrounded by a loop shaped wiring, and function as a loop-shaped coil.

The "directly opposing state" is a state in which the center of the coil surface of the power transmission coil 111 and the center of the coil surface of the power reception coil 211 coincide, and refers to a state in which one of the coil surface of the power transmission coil 111 and the coil surface of the power reception coil 211 completely overlaps the other. The coil surface of the power transmission coil 111 is assumed to be larger than the coil surface of the power reception coil 211. The "partially overlapping state" is a state in which the coil surface of the power reception coil 211 is partially overlapping the coil surface of the power transmission coil 111. In the "partially overlapping state", the area in which the coil surface of the power transmission coil 111 and the coil surface of the power reception coil 211 overlap is smaller than the area in which the coil surface of the power transmission coil 111 and the coil surface of the power reception coil 211 overlap in the directly opposing state.

Furthermore, a "non-opposing state" in which the power reception coil 211 is not opposing the power transmission coil 111 includes a "boundary state", a "separated state", and an "isolated state". The "boundary state" is a state in which the coil surface power reception coil 211 is not overlapping the coil surface of the power transmission coil 111, and the edge of the coil surface of the power transmission coil 111 and the edge of the coil surface of the power reception coil 211 are overlapping. As illustrated, one edge of the coil surface of the power transmission coil 111 and one edge of the coil surface of the power reception coil 211 are in the same position in the X axis direction. In the "boundary state" the area in which the coil surface of the power transmission coil 111 and the coil surface of the power reception coil 211 are opposing each other is equal to zero.

The "separated state" is a state in which the coil surface power reception coil 211 is not overlapping the coil surface of the power transmission coil 111, and further, the edge of the coil surface of the power transmission coil 111 and the edge of the coil surface of the power reception coil 211 are not overlapping. As illustrated, the edge of the coil surface of the power transmission coil 111 and the edge of the coil surface of the power reception coil 211 are in different positions in the X axis direction. In the "separated state" the coil surface of the power transmission coil 111 and the coil surface of the power reception coil 211 are completely separated. The "isolated state" is a state in which the power transmission coil 111 and the power reception coil 211 are in an opposing state, but the power transmission coil 111 and the power reception coil 211 are isolated at a distance that is greater than or equal to the distance at which the power transmission coil 111 and the power reception coil 211 are no longer capable of being electromagnetically coupled.

In the first embodiment, when the power transmission coil 111 and the power reception coil 211 are opposing each other, the power transmission coil 111 and the power reception coil 211 are in the "directly opposing state", or the power transmission coil 111 and the power reception coil 211 are in the "partially overlapping state". When the power transmission coil 111 and the power reception coil 211 are opposing each other, the distance of the power transmission coil 111 relative to the power reception coil 211 is assumed to be a distance at which the power transmission coil 111 and the power reception coil 211 can be electromagnetically coupled.

When the small mobility device 200 enters a range in which one of the power transmission unit groups G1 is installed, the distance between the power reception coil 211 of the small mobility device 200 and one of the power transmission coils 111 contained in the power transmission unit group G1 can become less than or equal to a predetermined threshold. In this case, the power transmission condition is satisfied. Furthermore, the power reception coil 211 and one of the power transmission coils 111 do not have to be opposing each other. When the movement speed of the small mobility device 200 is fast, if the supply of power to one of the power transmission unit groups G1 by a control of the control unit 130 is started after the small mobility device 200 has entered into the range in which the power transmission unit group G1 is installed, the timing at which the supply of power to the small mobility device 200 is started may be delayed. In such a case, it is desirable that the supply of power to the power transmission unit group G1 by a control of the control unit 130 is started before the small mobility device 200 enters the range in which the power transmission unit group G1 is installed. In this case, before the small mobility device 200 advances into a range in which one of the power transmission unit groups G1 is installed, the distance between the power reception coil 211 of the small mobility device 200 and one of the power transmission coils 111 may become less than or equal to a predetermined threshold, thereby satisfying the power transmission condition. The predetermined threshold is determined in consideration of the operation of the power transfer system 10 and the small mobility device 200.

The control unit 130, for example, determines the position of the small mobility device 200 from the received image data each time image data is received from the sensors 80. Specifically, the control unit 130 determines, from the image data received from the sensors 80, whether the small mobility device 200 is inside a range in which one of the power transmission unit groups G1 is installed. When the small mobility device 200 is inside a range in which one of the power transmission unit groups G1 is installed, the control unit 130 specifies the power transmission unit group G1 on which the small mobility device 200 is located. When the small mobility device 200 is inside an area in which one of the power transmission unit groups G1 is installed, the control unit 130 controls the power conversion unit 120 corresponding to the power transmission unit group G1, and starts to supply power to the power transmission unit group G1.

Furthermore, when the relative distance between the power transmission coil 111 and the power reception coil 211 exceeds the threshold, the power transmission condition is not satisfied. The power transmission condition is not satisfied, for example, when the small mobility device 200 is not inside a range in which one of the power transmission unit groups G1 is installed.

For example, after starting the supply of power to the power transmission unit group G1, if the control unit 130 determines from the image data received from the sensors 80 that the small mobility device 200 is no longer inside the range in which the power transmission unit group G1 is installed, it controls the power conversion unit 120 corresponding to the power transmission unit group G1, and stops the supply of power to the power transmission unit group G1.

In the first embodiment, the control unit 130 determines, from information acquired from the sensors 80, whether power transmission conditions, which include that the distance of a power transmission coil 111 relative to the power reception coil 211 is a predetermined threshold, is satisfied. Depending on the determination result, the control unit 130 switches between supplying or stopping the supply of power from the power conversion unit 120 to the power transmission unit group G1. Therefore, compared to a mode such as the technique described in PTL 1, in which the input impedance of a resonant circuit for power transmission is controlled, the standby current that constantly flows to the power transmission coils 111 can be reduced.

### A2. Second Embodiment

In the first embodiment, each power transmission unit group G1 was subjected to a control that supplies power or stops the supply of power from the power conversion unit 120 to the power transmission coil units 110. Therefore, a power transmission unit group G1 to which power is supplied from the power conversion unit 120 includes power transmission coil units 110 containing a power transmission coil 111 that is opposing the power reception coil 211, and power transmission coil units 110 containing a power transmission coil 111 that is not opposing the power reception coil 211.

In a second embodiment, by including the following configuration in addition to the configuration described in the first embodiment, a control is performed that determines whether power is transmitted to each power transmission coil unit 110. Note that the following description will be focused on the differences from the first embodiment. The configurations that are not specifically mentioned in the following description are the same as those of the first embodiment.

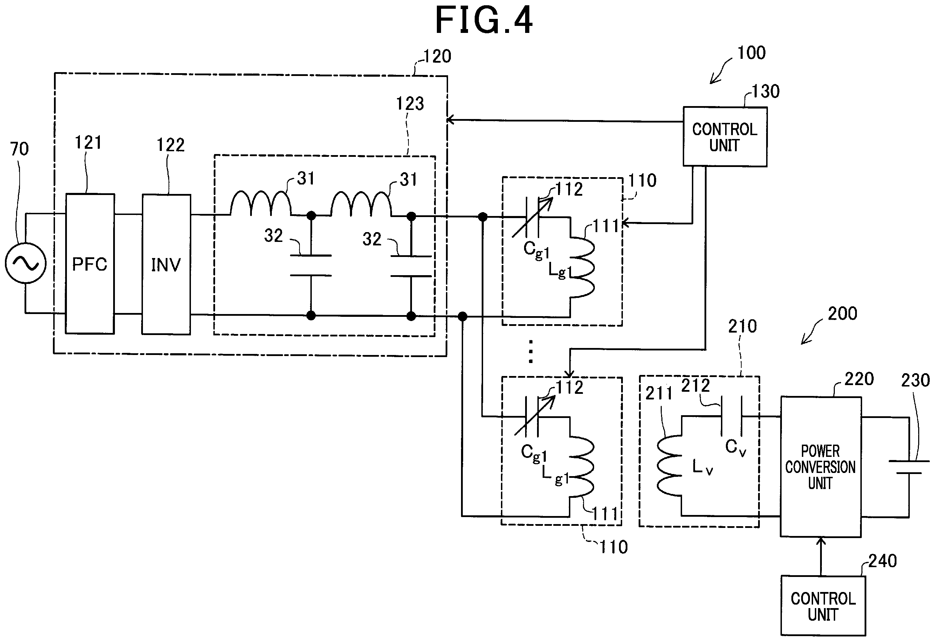

As shown in Fig. 4, the control unit 130 controls the input impedance of each power transmission resonant circuit such that the input impedance of a power transmission resonant circuit containing a power transmission coil 111 that is not opposing the power reception coil 211 becomes larger than the input impedance of a power transmission resonant circuit containing a power transmission coil 111 that is opposing the power reception coil 211. The input impedance is also referred to as an impedance.

Specifically, the control unit 130 sets, with respect to the power transmission resonant circuits containing a power transmission coil 111 that is opposing the power reception coil 211, at least one of an inductance L_{g1} of the power transmission coil 111 and a capacitance C_{g1} of the capacitor 112 such that the resonant frequency frt coincides with a fundamental frequency fsw of the AC power. When the resonant frequency frt coincides with the fundamental frequency fsw of the AC power, a resonance condition of the power transmission resonant circuit is satisfied. Therefore, the power transmission resonant circuits containing a power transmission coil 111 that is opposing the power reception coil 211 are in a resonant state. Note that the fundamental frequency fsw of the AC power is the fundamental frequency of the AC power that is supplied from the power conversion unit 120 to the power transmission coil units 110.

Furthermore, the control unit 130 sets, with respect to the power transmission resonant circuits containing a power transmission coil 111 that is not opposing the power reception coil 211, at least one of the inductance L_{g1} of the power transmission coil 111 and the capacitance C_{g1} of the capacitor 112 such that the resonant frequency frt does not coincide with the fundamental frequency fsw of the AC power. When the resonant frequency frt does not coincide with the fundamental frequency fsw of the AC power, the resonance condition of the power transmission resonant circuit is not satisfied. In this case, the power transmission resonant circuits containing a power transmission coil 111 that is not opposing the power reception coil 211 are in a non-resonant state. It is assumed that the inductance Lᵥ of the power reception coil 211 and the capacitance Cᵥ of the capacitor 212 are set such that a resonance condition of the power reception resonant circuit is satisfied, and that the resonant frequency frr coincides with the fundamental frequency fsw of the AC power.

In the resonant state, the imaginary part of the input impedance of the power transmission resonant circuit has a value close to zero. On the other hand, in the non-resonant state, the imaginary part of the input impedance of the power transmission resonant circuit does not have a value close to zero. In other words, the input impedance of a power transmission resonant circuit in the resonant state becomes smaller than the input impedance of a power transmission resonant circuit in the non-resonant state. Consequently, the flow of current is suppressed in a power transmission resonant circuit in the non-resonant state compared to a power transmission resonant circuit in the resonant state.

In the power transmission resonant circuits containing a power transmission coil 111 in a non-opposing state with the power reception coil 211, because the input impedance is set such that the resonance condition is not satisfied, power transmission from the power transmission coil unit 110 to the power reception coil unit 210 can be suppressed. On the other hand, in the power transmission resonant circuits containing a power transmission coil 111 in an opposing state with the power reception coil 211, because the input impedance is set such that the resonance condition is satisfied, power transmission from the power transmission coil unit 110 to the power reception coil unit 210 is not suppressed.

In the example shown in Fig. 4, variable capacitors whose capacitance C_{g1} can be changed are used as the capacitors 112. Therefore, the control unit 130 changes the capacitance C_{g1} of the capacitors 112 to control the input impedance of the power transmission resonant circuits. Alternatively, variable coil whose inductance L_{g1} can be changed may be used as the power transmission coils 111. In the opposing state, as a result of a control of the control unit 130, the inductance L_{g1} of the power transmission coil 111 is set to a value that satisfies the resonance condition. In the non-opposing state, as a result of a control of the control unit 130, the inductance L_{g1} of the power transmission coil 111 is set to a value that does not satisfy the resonance condition.

Alternatively, a configuration in which variable capacitors are used as the capacitors 112 and a configuration in which variable coils are used as the power transmission coils 111 may be used in combination. In the non-opposing state, the inductance L_{g1} of the power transmission coil 111 can be reduced, and the capacitance C_{g1} of the capacitor 112 can be reduced. Therefore, the input impedance can be increased compared to a case where either one of the inductance L_{g1} of the power transmission coil 111 and the capacitance C_{g1} of the capacitor 112 are set.

Alternatively, a configuration in which the power transmission resonant circuits are provided with a variable resistor can be used, and the input impedance of the power transmission resonant circuits may be controlled by controlling the resistance value of the variable resistor.

In this way, in the second embodiment, of the plurality of power transmission coil units 110 contained in the power transmission unit group G1 to which power is supplied by the power conversion unit 120, power transmission is suppressed to the power reception coil 211 from the power transmission coils 111 in the non-opposing state. On the other hand, power transmission to the power reception coil 211 is not suppressed from the power transmission coils 111 in the opposing state. In this way, power transmission to the power reception coil unit 210 can be controlled for each power transmission coil unit 110. Because unnecessary power transmission is not performed by power transmission coil units 110 that need to perform power transmission, the supply of power can be efficiently performed.

### A3. Third Embodiment

Furthermore, the power conversion unit 120 may not only supply power to the power transmission coil units 110 in which the distance of a power reception coil 111 relative to the power reception coil 211 is less than or equal to a threshold, but also supply power to an adjacent power transmission coil unit 110.

Specifically, the power transmission conditions may include that:
(i) the distance of a power transmission coil 111 relative to the power reception coil 211 included in the small mobility device 200 is less than or equal to a threshold,
   or
(ii) the power transmission unit group G1 is another group that is adjacent to a power transmission unit group G1 satisfying that the distance of a power transmission coil 111 relative to the power reception coil 211 of the small mobility device 200 is less than or equal to the threshold.

In a power transmission unit group G1 corresponding to (ii) above, it is possible to envisage cases where the distance of the power transmission coil 111 relative to the power reception coil 211 of the small mobility device 200 is less than or equal to the threshold, and cases where the distance of the power transmission coil 111 relative to the power reception coil 211 of the small mobility device 200 exceeds the threshold. In a third embodiment, the power transmission unit group G1 corresponding to (ii) only needs to be adjacent to the power transmission unit group G1 corresponding to (i). It is assumed that, for the power transmission unit group G1 corresponding to (ii), the distance of the power transmission coils 111 relative to the power reception coil 211 of the small mobility device 200 does not need to be considered. For example, when at least part of the boundary of a region in which the power transmission unit group G1 corresponding to (i) is installed and at least part of the boundary of a region in which another power transmission unit group G1 is installed are overlapping, the another power transmission unit group G1 may be determined to be adjacent to the power transmission unit group G1 corresponding to (i).

Alternatively, when the distance in a horizontal plane between the boundary of a region in which the power transmission unit group G1 corresponding to (i) is installed and the boundary of a region in which another power transmission unit group G1 is installed is smaller than a distance set in advance, the another power transmission unit group G1 may be determined to be adjacent to the power transmission unit group G1 corresponding to (i). In this case, it is preferable that the distance between the boundary of the power transmission unit group G1 and the boundary of the another power transmission unit group G1 is a distance that can approximately be spanned by the small mobility device 200. This is to continue the power transmission to the small mobility device 200.

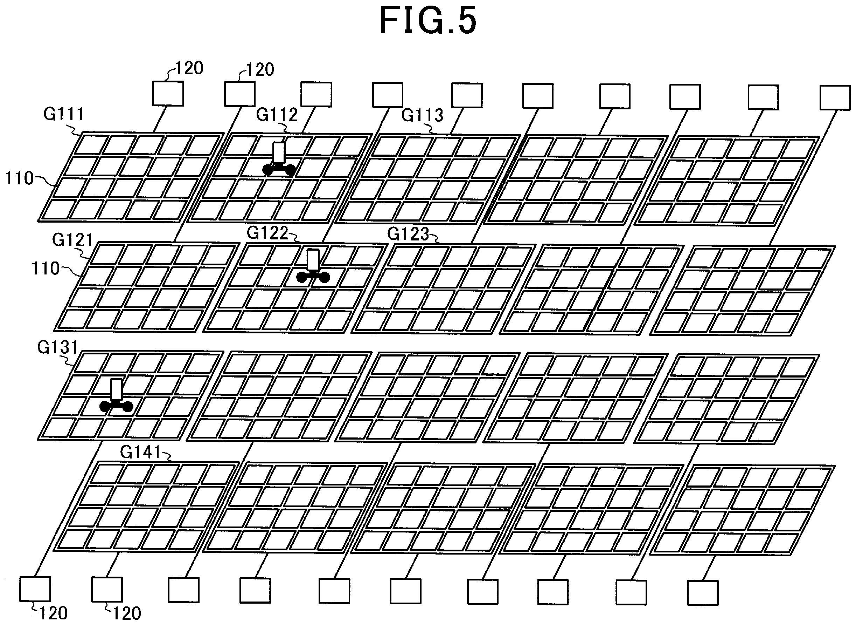

For example, as shown in Fig. 5, a plurality of power transmission unit groups G1 are installed on a pathway on which small mobility devices 200 travel. In Fig. 5, illustration of the power sources 70, the sensors 80, the control unit 130, and the like, is omitted. Of the plurality of power transmission unit groups G1, a small mobility device 200 is in an area in which the power transmission unit group G112 is installed. In this case, the control unit 130 determines that the power transmission unit group G111, the power transmission unit group G113, the power transmission unit group G121, and the power transmission unit group G122, which are arranged around the power transmission unit group G112, are the power transmission unit groups adjacent to the power transmission unit group G112. The control unit 130 controls the power conversion units 120 such that power is supplied to the adjacent power transmission unit groups.

For example, when a small mobility device 200 moves from the power transmission unit group G1 on which it is currently located, the supply of power from the power conversion units 220 to the other adjacent power transmission unit groups G1 is started before entry of the small mobility device 200. Therefore, even when the small mobility device 200 is moving, power can be continuously supplied to the small mobility device 200. Furthermore, compared to a case where current flows to a power transmission unit group G1 after it is detected that the small mobility device 200 has entered the power transmission unit group G1, the time until current flows to the power transmission coil 221 can be shortened.

Furthermore, suppose that the direction in which the small mobility devices 200 enter the plurality of power transmission unit groups G1 is fixed. In the example shown in Fig. 5, suppose that the small mobility devices 200 enter from the column in which the power transmission unit groups G111, G121, G131 and G141 are installed in a direction that is orthogonal to the column. In this case, the control unit 130 may control the power conversion units 120 such that power is constantly supplied to the power transmission unit groups G111, G121, G131 and G141. Alternatively, for example, the control unit 130 may estimate the movement direction of the small mobility devices 200 based on the orientation of the small mobility devices 200 and the current position of the small mobility devices 200 from image data acquired by cameras serving as the sensors 80. In this case, it is assumed that the control unit 130 has estimated the movement direction of the small mobility devices 200. The control unit 130 supplies power from the power conversion units 220 to the one or more power transmission unit groups G1 that are arranged in the estimated movement direction.

In addition, it is preferable that the output voltage of the power conversion units 120 that supply power to each of the power transmission unit groups G1 are phase-synchronized. This is to continue power transmission to the small mobility device 200 while the small mobility device 200 is moving while spanning a plurality of power transmission unit groups G1.

### A4. Fourth Embodiment

In the first embodiment, an example has been described in which the sensors 80 are cameras. The sensors 80 are not limited to being cameras. As a sensor 80, a weight sensor or a load switch mounted on the floor may be used. When a load is received, the weight sensor or the load switch transmits a detection signal to the control unit 130 via wireless communication. For example, a plurality of weight sensors or load switches may be installed at the boundaries of the areas in which the power transmission unit groups G1 are installed. When the small mobility device 200 passes through the boundary of an area in which a power transmission unit group G1 is installed, a weight sensor or load switch transmits, to the control unit 130, a detection signal indicating that a load has been received. Note that it is assumed that the control unit 130 stores, in advance, information in a memory that indicates the positions in which each of the weight sensors or load switches are arranged. The control unit 130 is capable of determining, from the arrangement positions of the weight sensors or load switches that serve as transmission sources of the detection signal, which power transmission unit group G1 the small mobility device 200 has entered.

Alternatively, a laser sensor may be used as a sensor 80. For example, one or more laser sensors may be arranged in positions that enable an object passing through the boundaries of areas in which the power transmission unit groups G1 are installed to be detected. When a small mobility device 200 passes through a boundary of an area in which a power transmission unit group G1 is installed, a laser sensor transmits, to the control unit 130, a detection signal indicating that a passing object has been detected. Note that it is assumed that the control unit 130 stores, in advance, information in a memory that indicates the positions in which each of the laser sensors are arranged. The control unit 130 is capable of determining, based on the detection signals received from the laser sensors, which power transmission unit group G1 the small mobility device 200 has entered.

Furthermore, for example, suppose that a gate that automatically opens and closes when a small mobility device 200 is detected is installed in the pathway that enters an area in which a power transmission unit group G1 is installed. In this case, when the control unit 130 receives a detection signal from the gate that indicates that the gate has opened, it may determine that the small mobility device 200 has entered the region in which the power transmission unit group G1 is installed.

### A5. Fifth Embodiment

In the first and third embodiments, examples have been described in which position detectors provided outside the small mobility device 200 are used as sensors 80. Alternatively, a position detector provided in the small mobility device 200 may be used as a sensor 80. For example, the small mobility device 200 may be provided with an antenna and a global positioning system (GPS) receiver. The small mobility device 200 may transmit position information received by the GPS receiver and self-identifying information to the control unit 130 at set time intervals. The control unit 130 determines, from the position information received from the small mobility device 200, which power transmission unit group G1 the small mobility device 200 has entered. The control unit 130 is capable of individually detecting the positions of the small mobility devices 200 by the position detector provided in each small mobility device 200. The position detector provided in the small mobility device 200 is also referred to as a first position detector. A fixed-installation position detector is also referred to as a second position detector. Furthermore, as the sensors 80, a position detector installed outside the small mobility devices 200 and a position detector provided to the small mobility device 200 may be used in combination. Alternatively, as the sensors 80, a position detector provided to the small mobility device 200 may be used alone without using a position detector installed outside the small mobility devices 200.

### A6. Sixth Embodiment

The small mobility device 200 may be provided with a function that makes a selection to not receive a supply of power. For example, suppose that a power reception condition that enables the small mobility device 200 to receive a supply of power is set as a condition that the power stored in the battery 230 is less than or equal to a reference value. In this case, the control unit 240 of the small mobility device 200 determines that a supply of power is not necessary and makes a selection to not receive a supply of power when the power stored in the battery 230 is more than a reference value. The control unit 240 is also referred to as a selection unit.

When the control unit 240 makes a selection to not receive a supply of power, it controls the power conversion unit 220 so as to not generate DC power from the electromotive force induced in the power reception coil 211. In this way, the small mobility device 200 selects whether to receive power such that power is received when the power reception condition is satisfied, and power is not received when the power reception condition is not satisfied. Therefore, power can be supplied at an appropriate timing according to the status of the small mobility device 200.

Alternatively, the small mobility device 200 may be provided with a transmitter that outputs a prohibition signal indicating that power transmission is prohibited. For example, the control unit 240 of the small mobility device 200 is capable of continuously outputting a prohibition signal from the transmitter while the power reception condition is not satisfied. The transmitter is also referred to as a device. The control unit 130 monitors whether a small mobility device 200 outputting a prohibition signal is inside an area in which a power transmission unit group G1 is installed. For example, a small mobility device 200 outputting a prohibition signal can sometimes enter into a power transmission unit group G1 to which power is being supplied. In this case, the control unit 130 controls the power conversion unit 120 to stop the supply of power to the power transmission unit group G1. Furthermore, for example, a small mobility device 200 that is outputting a prohibition signal and another small mobility device 200 that is not outputting a prohibition signal can sometimes enter into a power transmission unit group G1 to which power is not being supplied. In this case, the control unit 130 controls the power conversion unit 120 so as to not supply power to the power transmission unit group G1.

In addition, suppose that a small mobility device 200 is traveling for the purpose of performing maintenance of the power transmission unit groups G1. In this case, the small mobility device 200 may continuously output a prohibition signal regardless of the power reception conditions. For example, even when the small mobility device 200 is inside an area in which a power transmission unit group G1 is installed, when the small mobility device 200 is outputting a prohibition signal, the control unit 130 does not cause power to be supplied from the corresponding power conversion unit 120 to the power transmission unit group G1. In this way, power can be supplied at an appropriate timing according to the state of the small mobility device 200.

Furthermore, the transmitter that outputs a prohibition signal may be carried by a person. For example, an operator that is working on or near the power transmission unit groups G1 can carry the transmitter. When the control unit 130 detects the output of a prohibition signal within a range from the power transmission unit group G1 that has been set in advance, it causes power to not be supplied from the corresponding power conversion unit 120 to the power transmission unit group G1.

A transmitter that outputs a prohibition signal may be provided in only the small mobility device 200, and a person does not have to carry a transmitter. Alternatively, only a person may carry a transmitter that outputs a prohibition signal, and the small mobility device 200 does not have to be provided with a transmitter. Alternatively, the small mobility device 200 may be provided with a transmitter, and a person may also carry a transmitter.

### A7. Seventh Embodiment

In the first embodiment, the control unit 130 detects the position of a small mobility device 200, and supplies power to the power transmission unit group G1 that is installed at the position.

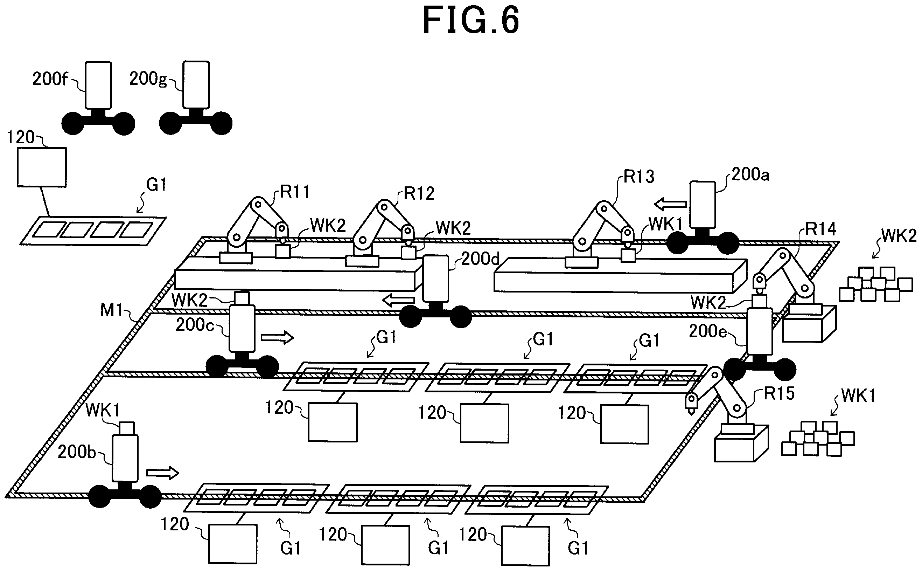

As shown in Fig. 6, an example will be described in which small mobility devices 200 travel in a factory in which robots R11, R12, R13, R14 and R15 are operating for the purpose of assembling parts. In Fig. 6, illustration of the power sources 70, the control unit 130, and the like, is omitted. The small mobility devices 200 include five small mobility devices 200a to 200g. Hereinafter, the small mobility devices 200a to 200d are sometimes collectively referred to as small mobility devices 200. In the factory, the robots R11, R12, R13, R14 and R15 are operating with the purpose of assembling parts. The robots R11, R12, R13, R14 and R15 are sometimes collectively referred to as robots R1. The small mobility devices 200 receive work items from the robots R1, and autonomously travel inside the factory to transport the work items to the other robots R1. The small mobility devices 200 function as so-called automated guided vehicles (AGV).

In the example shown in Fig. 6, the small mobility devices 200a to 200e are performing transportation work. The small mobility devices 200f and 200g are standing by outside the travel route in preparation for occasions where the small mobility devices 200a to 200e are unable to perform transportation work due to maintenance or breakdowns. The small mobility devices 200 are assumed to be provided with a processor and memory. The memory provided in the small mobility devices 200 stores a travel program that controls the small mobility devices 200 so as to travel around a predetermined travel route at a set speed. The autonomous driving function of the small mobility devices 200 is realized as a result of the processor provided in the small mobility devices 200 executing the travel program.

In the example shown in Fig. 6, magnetic tape M1 indicating the travel route of the small mobility devices 200 is attached to the floor inside the factory. The small mobility devices 200 are assumed to be provided with a magnetic induction sensor. The small mobility devices 200 travel along the travel route indicated by the magnetic tape M1. Furthermore, the corners of the travel route are provided with magnetic markers that indicate the positions of the corners. The speed when the small mobility devices 200 are traveling on a straight route and the speed when the small mobility devices 200 are turning a corner are set in advance. The speed when turning a corner is set to be slower than the speed when traveling on a straight route. The small mobility devices 200 determine that they are passing through a corner due to the magnetic marker indicating the position of the corner. Therefore, the small mobility devices 200 decelerate when turning a corner, and accelerate to the original speed after turning the corner.

The small mobility devices 200a and 200b receive work items WK1 from the robot R13, and transport the work items WK1 to the robot R15. The small mobility devices 200a and 200b are set with information in advance that indicates the positions of the corners to be turned. In addition, the small mobility devices 200a and 200b are set with information that indicates which robot R1 they should stop near. In this way, the small mobility devices 200a and 200b are capable of traveling on the same route.

The small mobility devices 200c, 200d, and 200e receive work items WK2 from the robots R12 or R11, and transport the work items WK2 to the robot R14. The small mobility devices 200c, 200d and 200e are set with information in advance that indicates the positions of the corners to be turned. In addition, the small mobility devices 200c, 200d and 200e are set with information that indicates which robot R1 they should stop near. Therefore, the small mobility devices 200c, 200d and 200e are capable of traveling on the same route.

Furthermore, a plurality of power transmission unit groups G1 are installed on a pathway on which the small mobility devices 200 travel. The small mobility devices 200 are capable of receiving a supply of power while traveling.

In a seventh embodiment, the control unit 130 estimates the movement destination of the small mobility devices 200. As mentioned above, the travel speed of the small mobility devices 200 on the straight routes and the travel speed at the corners are set in advance. Therefore, the control unit 130 is capable of estimating the current position of a small mobility device 200 based on the time point at which the small mobility device 200 started to travel, the travel route of the small mobility device 200, and the set value of the travel speed. In this case, the control unit 130 does not need to receive position information from the small mobility device 200. Furthermore, the control unit 130 is capable of estimating, from the estimation result of the current location of the small mobility device 200, the power transmission unit group G1 at the movement destination that the small mobility device 200 will enter. The control unit 130 controls the corresponding power conversion unit 220 such that, before the small mobility device 200 enters the power transmission unit group G1 at the estimated movement destination, current flows to the power transmission unit group G1 at the movement destination.

Therefore, it is possible to continuously supply power to a small mobility device 200 that is traveling while spanning a plurality of power transmission unit groups G1. Furthermore, compared to a case where current flows to a power transmission unit group G1 after it is detected that the small mobility device 200 has entered the power transmission unit group G1, the time until current flows to the power transmission coil 221 can be shortened.

Furthermore, as shown in Fig. 6, when the small mobility devices 200 transport the work items WK1 and WK2 inside the assembly factory according to the assembly steps, a travel plan that includes the routes to be traveled by the small mobility devices 200 and the number of work items to be transported by the small mobility devices 200 is determined in advance. It is assumed that travel plan information indicating the travel plan is stored in advance in a memory provided in the control unit 130. The memory provided in the control unit 130 is also referred to as a first storage unit. The control unit 130 may calculate in advance the amount of energy consumed by the small mobility devices 200 based on the travel plan and the weight of a single work item, and estimate the timings at which the small mobility devices 200 will require charging, and the power required for charging. When a timing arrives in which a small mobility device 200 requires charging, the control unit 130 may control the corresponding power conversion unit 220 such that, before the small mobility device 200 enters the power transmission unit group G1 at the estimated movement destination, current flows to the power transmission unit groups G1 installed on the travel route.

Furthermore, suppose that maintenance is performed on a small mobility device 200 that has continuously performed transportation work for a predetermined amount of time. For example, assume that the small mobility devices 200 count an elapsed time from a travel start time point. When the elapsed time becomes a predetermined time, it is assumed that the small mobility device 200 is controlled by a travel program such that it moves to the outside of the travel route. Power may be supplied to the small mobility device 200 at a timing in which the small mobility device 200 reaches the outside of the travel route. In such a case, power is supplied to the power transmission unit group G1 by a power transmission unit group G1 that is installed outside the travel route.

A planned supply of power to the small mobility devices 200 in this manner after the small mobility devices 200 have continuously performed transportation work for a set period of time from the travel start time point is referred to a power transfer plan. The memory provided in the control unit 130 stores, as power transfer plan information representing the power transfer plan, a predetermined time period as the elapsed time from the travel start time point. The memory provided in the control unit 130 is also referred to as a second storage unit. The control unit 130 controls the corresponding power conversion unit 220 such that current flows to the power transmission unit group G1 installed outside the travel route before the small mobility device 200 that has traveled outside the travel route enters. When power is supplied to the small mobility devices 200 from the power transmission unit group G1 installed outside the travel route, it is not necessary to provide the power transmission unit groups G1 on the travel route.

Alternatively, the control unit 130 controls the corresponding power conversion units 220 such that current flows to the power transmission unit groups G1 installed on the pathway on which the small mobility device 200 planning to travel outside the travel route travels before moving to the outside of the travel route.

In addition, when one of the small mobility devices 200 has moved outside the travel route, one of the small mobility devices 200f or 200g that are standing by may move inside the travel route and perform transportation work.

### A8. Eighth Embodiment

Alternatively, the control unit 130 may acquire, by communication from the small mobility devices 200, detection data that has been detected by a speed sensor or an acceleration sensor. In this case, it is assumed that the small mobility devices 200 include a speed sensor or an acceleration sensor. The detection data contains speed information indicating the speed, or acceleration information indicating the acceleration. The control unit 130 is capable of estimating the current position of a small mobility device 200 based on the time point at which the small mobility device 200 started to travel, the travel route of the small mobility device 200, and the speed or acceleration. The control unit 130 is capable of estimating, from the estimation result of the current location of the small mobility device 200, the power transmission unit group G1 at the movement destination that the small mobility device 200 will enter. The control unit 130 controls the corresponding power conversion unit 220 such that, before the small mobility device 200 enters the power transmission unit group G1 at the estimated movement destination, current flows to the power transmission unit group G1 at the movement destination. In this way, the movement destination of the small mobility device 200 can be accurately estimated.

### A9. Ninth Embodiment

In the seventh embodiment, an example has been described in which the control unit 130 estimates the movement destination of a small mobility device 200 from a travel plan or a power transfer plan. Alternatively, the control unit 130 may determine whether it is necessary to supply power to the small mobility device 200 as described below.

It is assumed that the small mobility device 200 is provided with a function that monitors a charging state (state of charge: SOC) of the battery 230. The small mobility device 200 calculates the amount of remaining power that is charged in the battery 230 from the cell voltage of the battery 230 and the cell temperature of the battery 230. For example, when the amount of remaining charge that is charged in the battery 230 falls below a fixed value, it is assumed that the small mobility device 200 is controlled by a travel program such that it moves to the outside of the travel route.

In this case, the control unit 130 may acquire, from the small mobility device 200, charging information indicating the charging state of the battery 230 provided in the small mobility device 200. The charging information indicating the charging state of the battery 230 is, for example, information indicating a ratio of the amount of power that is currently stored in the battery 230 to the full capacity that can be stored in the battery 230. The control unit 130 may determine that power reception by the battery 230 of the small mobility device 200 is necessary when the capacity that is currently stored in the battery 230, which is indicated by the charging information, falls below a predetermined reference value. For example, the control unit 130 controls the corresponding power conversion unit 220 such that current flows to the power transmission unit group G1 installed outside the travel route before the small mobility device 200 that has traveled outside the travel route enters. In such a case, the control unit 130 is capable of predicting the movement destination of the small mobility device 200 regardless of the travel plan and the power transfer plan.

Furthermore, the control unit 130 may acquire, from the small mobility device 200 by communication, time point information indicating a charging time point in which the battery 230 of the small mobility device 200 was previously charged, and distance information indicating the distance traveled by the small mobility device 200 from the time point until the current time. The previous charging means that no charging of the battery 230 has been performed since the charging. The control unit 130 is capable of determining, according to the charging time point in which the battery 230 was previously charged, and the distance traveled by the small mobility device 200 since the charging time point, whether it is necessary to charge the battery 230 of the small mobility device 200.

In addition, when the control unit 130 determines that charging of the battery 230 is necessary, for example, the control unit 130 controls the corresponding power conversion unit 220 such that current flows to the power transmission unit group G1 installed outside the travel route before the small mobility device 200 that has traveled outside the travel route enters. Alternatively, the control unit 130 may estimate that the small mobility device 200 will move to a power transmission unit group G1 that is close to the current position. The control unit 130 estimates the movement destination of the mobile body in which power reception is necessary, and supply power from the corresponding power conversion unit 220 to the power transmission unit group G1 that has been specified from the estimation result of the movement destination of the small mobility device 200. In this way, the movement destination of the small mobility device 200 can be accurately estimated by using the charging information when estimating the movement destination.

Moreover, the control unit 130 does not have to acquire time point information indicating the charging time point in which the battery 230 was previously charged from the small mobility device 200. For example, the control unit 130 may store, in the memory as the charging time point, a time point in which power was supplied to the small mobility device 200 as determined from image data captured by the cameras of the sensors 80. The control unit 130 is capable of determining, from the charging time point stored in the memory, and distance information acquired from the small mobility device 200 indicating the distance traveled by the small mobility device 200 since the charging time point, whether it is necessary to charge the battery 230 of the small mobility device 200.

### A10. Tenth Embodiment

In addition, when the small mobility device 200 does not travel around a set route, a travel plan such as that described below can sometimes be set in advance. In such a case, the control unit 130 may estimate the movement destination of a small mobility device 200 from travel plan information indicating the travel plan of the small mobility device 200. It is assumed that the travel plan information is stored in advance in a memory provided in the control unit 130. The travel plan indicates, for example, that the small mobility device 200 will move to a set location at a set time point. The travel plan information is, for example, information in which information indicating a movement location is associated with a movement time point. Therefore, the control unit 130 is capable of efficiently estimating the movement destination of the small mobility device 200 based on the travel plan information.

Furthermore, when the small mobility device 200 does not travel around a set route, a power transfer plan such as that described below can sometimes be set in advance. In such a case, the control unit 130 may estimate the movement destination of a small mobility device 200 from power transfer plan information indicating the power transfer plan of the small mobility device 200. It is assumed that the power transfer plan information is stored in advance in a memory provided in the control unit 130. The power transfer plan indicates, for example, that a supply of power to the small mobility device 200 is planned at a set time point. The power transfer plan information includes information indicating a planned power transfer time point in which a supply of power to the small mobility device 200 is planned to occur. For example, suppose that there is a small mobility device 200 in which a supply of power is planned to occur between the current time point and a time point before 5 minutes elapses. The control unit 130 may estimate that the small mobility device 200 will move to the power transmission unit group G1 that is close to the current position. Therefore, the control unit 130 is capable of efficiently estimating the movement destination of the small mobility device 200 based on the power transfer plan information.

In addition, in a case where a plurality of small mobility devices 200 are traveling inside a factory, the small mobility devices 200 are provided with a function that, for example, communicates with the other small mobility devices 200 and travels in a manner that does not interfere with each other's travel in order to avoid collisions. In such a case, the control unit 130 may estimate the movement destination of a certain small mobility device 200 assuming that the other small mobility devices 200 do not enter into a set region containing the current location of the small mobility device 200 for a predetermined period of time. Therefore, the movement destination of the small mobility device 200 can be efficiently estimated.

### A11. Eleventh Embodiment

Furthermore, the control unit 130 may determine the position of a small mobility device 200 as follows. The control unit 130 may determine whether the small mobility device 200 is in an area in which a power transmission unit group G1 is installed based on changes in the amount of current flowing from the power conversion units 120 to the power transmission unit groups G1. For example, a current sensor that detects the amount of current flowing from a power conversion unit 120 is installed between the power conversion unit 120 and the power transmission unit group G1. Note that it is assumed that a constant amount of current flows from the power conversion unit 120 to the power transmission unit group G1 regardless of whether the small mobility device 200 is on the power transmission unit group G1. In addition, in the following description, it is assumed that a control of the input impedance of the power transmission resonant circuit of the power transmission coil unit 110 described in the second embodiment is not performed.

For example, suppose that when a small mobility device 200 enters a power transmission unit group G1, the power reception coil 211 of the small mobility device 200 opposes one of the power transmission coils 111 contained in the power transmission unit group G1, and the power transmission resonant circuit containing the power transmission coil 111 and the power reception resonance circuit containing the power reception coil 211 are in a resonant state. In this case, because the input impedance of the power transmission resonant circuit becomes low, the current flowing from the power conversion unit 120 to the power transmission unit group G1 increases. The control unit 130 may determine that the small mobility device 200 is in the area in which the power transmission unit group G1 is installed when the amount of current flowing from the power conversion unit 120 to the power transmission unit group G1 increases to at least a predetermined reference value. In this way, the position of the small mobility device 200 can be detected with a simple configuration without using information relating to charging acquired from the sensors 80, the small mobility device 200, and the like.

Alternatively, each of the power transmission coils 111 may be provided with a current sensor that detects the amount of current flowing into the power transmission coil 111 or a voltage sensor that detects the voltage applied to the power transmission coil 111. As mentioned above, when the power transmission coil 111 and the power reception coil 211 are opposing each other, and the power transmission resonant circuit containing the power transmission coil 111 and the power reception resonant circuit containing the power reception coil 211 are in a resonant state, the current flowing from the power conversion unit 120 to the power transmission unit group G1 increases. The control unit 130 is capable of determining, from the detection value of the current sensor or the voltage sensor, whether the small mobility device 200 is in the area in which the power transmission unit group G1 is installed. Further, the control unit 130 is capable of specifying the power transmission coil 111 that is opposing the power reception coil 211 of the small mobility device 200.

### A12. Twelfth Embodiment

For example, suppose that power transfer systems 10A and 10B are installed inside a factory. The power transfer systems 10A and 10B are assumed to have the same configuration as the power transfer system 10 shown in Fig. 1. In this case, the control unit 130 of the power transfer system 10A may transmit, to the control unit 130 provided in the power transfer system 10B, information indicating whether a small mobility device 200 is in the areas in which the power transmission unit groups G1 serving as control targets are installed. The power transmission unit groups G1 serving as control targets of the control unit 130 of the power transfer system 10A are the power transmission unit groups G1 provided in the power transfer system 10A. Furthermore, the control unit 130 of the power transfer system 10A may receive, from the control unit 130 of the power transfer system 10B, information indicating whether the small mobility device 200 is in the areas in which the power transmission unit groups G1 provided in the power transfer system 10B are installed.

For example, suppose that there are a small number of small mobility devices 200 in the power transmission unit groups G1 provided in the power transfer system 10A, and a large number of small mobility devices 200 are in the power transmission unit groups G1 provided in another power transfer system 10B. In such a case, the control unit 130 of the power transfer system 10B is capable of notifying, by a communication, the small mobility devices 200 in the area in which the power transmission unit groups G1 are installed to move to the power transfer system 10A. This makes it possible to prevent the operating rate of the power transfer system 10B from exceeding the power transfer capacity of the power transfer system 10B. As a result of cooperation between the plurality of control units 130, power can be efficiently supplied to the small mobility devices 200.

### A13. Thirteenth Embodiment

The control unit 130 may monitor the power supplied to a plurality of power transmission unit groups G1 in a set period of time. For example, when the total power supplied per unit time to the plurality of power transmission unit groups G1 exceeds a reference value set in advance, the control unit 130 may control each of the power conversion units 120 that supply power to a portion of the power transmission unit groups G1 to limit the supply of power to the portion of the power transmission unit groups G1.

For example, when the amount of power supplied to the power transmission unit groups exceeds the amount of power that can be supplied from the power sources 70, it is possible to avoid the occurrence of power source failures in the power transfer system 10 by stopping the supply of power to a portion of the power transmission unit groups G1.

In addition, the control unit 130 may subject the power transmission unit groups G1 that are arranged in positions far away from the positions of the small mobility devices 200 to a limitation in power transfer. The power transmission unit groups G1 that are arranged in positions far away from the positions of the small mobility devices 200 represent power transmission unit groups G1 whose distances are, for example, a predetermined distance or more from the small mobility devices 200. This can avoid circumstances in which power cannot be continuously supplied to the small mobility devices 200.

Even after starting to limit the power transfer, the control unit 130 monitors the power supplied to the plurality of power transmission unit groups G1 in a set period of time. The control unit 130 continues to limit the power supplied to a portion of the power transmission unit groups G1 until the total power in the set period of time becomes less than or equal to the predetermined reference value. In addition, the control unit 130 may continue to increase the number of power transmission unit groups G1 subjected to a limitation in power transfer until the total power in the set period of time becomes less than or equal to the reference value set in advance.

When the total power in the set period of time becomes less than or equal to the predetermined reference value, the control unit 130 removes the limitation in the power supplied to a portion of the power transmission unit groups G1. In addition, the control unit 130 may stop increasing the number of power transmission unit groups G1 subjected to a limitation in power transfer when the total power in the set period of time becomes less than or equal to the reference value. Also, the control unit 130 may gradually decrease the number of power transmission unit groups G1 subjected to the limitation according to the total power in the set period of time.

### B. Other Embodiments

In the first embodiment, an example has been described in which a single power conversion unit 120 controls the supply of power to a single power transmission unit group G1. However, a single power conversion unit 120 may control the supply of power to two or more power transmission unit groups G1.

In the first embodiment, an example has been described in which the power transfer apparatus 100 includes a plurality of power conversion units 120, but the power transfer apparatus 100 may include a single power conversion unit 120.

In the first embodiment, although the control unit 130 specifies the power transmission unit group G1 that the small mobility device 200 is on from image data received from the sensors 80, the control unit 130 may specify the position of the small mobility device 200 inside the power transmission unit group G1 from the image data received from the sensors 80.

In the first embodiment, an example has been described in which the coil surface of the power transmission coil 111 is larger than the coil surface of the power reception coil 211, but the coil surface of the power transmission coil 111 may be the same size as the coil surface of the power reception coil 211, or may be smaller than the size of the coil surface of the power reception coil 211.

In the example shown in Fig. 1, although the plurality of power transmission coil units 110 contained in the power transmission unit group G1 are arranged in a matrix form, the power transmission coil units 110 may be arranged in a linear shape.

The present disclosure is not limited to the embodiments described above, and can be realized in various configurations in a scope not departing from the spirit thereof. For example, the technical features in the embodiments corresponding to the technical features in each aspect described under the Summary of the Invention heading may be replaced or combined as appropriate in order to solve some or all of the problems described above, or to achieve some or all of the effects described above. Furthermore, if a technical feature is not described in the present specification as being essential, it may be deleted as appropriate.

The features of the present disclosure are as follows.

### [Aspect 1]

A wireless power transfer system (10) that supplies power to a mobile body (200) provided with a power reception unit (210) including a power reception coil (211), the wireless power transfer system comprising:
a power conversion unit (120) configured to generate power to be transmitted to the power reception coil;
one or more power transmission unit groups (G1) that are each constituted by two or more power transmission units (110), each of the power transmission units having a power transmission circuit including a power transmission coil (111), and each of the power transmission units receiving a supply of power from the power conversion unit and transmitting power from the power transmission coil to the power reception coil;
a control unit (130) configured to control the supply of power from the power conversion unit to the one or more power transmission unit groups; and
one or more position detection units (80) configured to detect a position of the mobile body; wherein
the control unit is configured to, based on position information indicating the position of the mobile body detected by the one or more position detection units,
   cause power to be supplied from the power conversion unit to a power transmission unit group that satisfies a power transmission condition among the one or more power transmission unit groups, the power transmission condition including that a distance of the power transmission coil relative to the power reception coil of the mobile body is less than or equal to a predetermined threshold value, and
   not cause power to be supplied from the power conversion unit to a power transmission unit group that does not satisfy the power transmission condition among the one or more power transmission unit groups.

### [Aspect 2]

The wireless power transfer system according to aspect 1, wherein the control unit is configured to:
supply power to the power reception unit by controlling an impedance of the power transmission circuit having the power transmission coil that is opposing the power reception coil to be smaller than an impedance of the power transmission circuit having the power transmission coil that is not opposing the power reception coil, and
stop power from being supplied to the power reception unit by controlling an impedance of the power transmission circuit having the power transmission coil that is not opposing the power reception coil to be larger than an impedance of the power transmission circuit having the power transmission coil that is opposing the power reception coil.

### [Aspect 3]

The wireless power transfer system according to aspect 1 or 2, wherein
the one or more position detection units include a first position detector provided in the mobile body that detects the position of the mobile body, and
the control unit is configured to acquire, from the first position detector, as the position information, information indicating the position of the mobile body that has been detected by the first position detector.

### [Aspect 4]

The wireless power transfer system according to any one of aspects 1 to 3, wherein
the one or more position detection units include a second position detector provided outside the mobile body that detects the position of the mobile body, and
the control unit is configured to acquire, from the second position detector, as the position information, information indicating the position of the mobile body that has been detected by the second position detector.

### [Aspect 5]

The wireless power transfer system according to any one of aspects 1 to 4, wherein
the one or more position detection units include a second position detector provided outside the mobile body that detects the position of the mobile body, and
the control unit is configured to acquire, from the second position detector, as the position information, information indicating the position of the mobile body that has been detected by the second position detector.

### [Aspect 6]

The wireless power transfer system according to any one of aspects 1 or 5, wherein
the one or more power transmission unit groups are a plurality of power transmission unit groups that are installed on a pathway on which the mobile body travels,
the power conversion unit is set so as to supply or stop a supply of power to each of the power transmission unit groups, and
the control unit is configured to:
   estimate a movement destination of the mobile body,
   specify a power transmission unit group installed at the movement destination among the plurality of power transmission unit groups, and
   control the power conversion unit to cause a current to flow to the specified power transmission unit group before the mobile body enters an area in which the specified power transmission unit group is installed.

### [Aspect 7]

The wireless power transfer system according to aspect 6, wherein
the control unit is configured to:
acquire, from the mobile body, speed information indicating a speed of the mobile body or acceleration information indicating an acceleration of the mobile body, and
estimate the movement destination from the speed indicated by the speed information or the acceleration indicated by the acceleration information.

### [Aspect 8]

The wireless power transfer system according to aspect 6 or 7, further comprising
a first storage unit configured to store travel plan information of the mobile body that has been determined in advance, wherein
the control unit is configured to estimate the movement destination based on the travel plan information.

### [Aspect 9]

The wireless power transfer system according to any one of aspects 6 to 8, further comprising
a second storage unit configured to store power transfer plan information of the mobile body that has been determined in advance, wherein
the control unit is configured to estimate the movement destination of the mobile body based on the power transfer plan information.

### [Aspect 10]

The wireless power transfer system according to any one of aspects 6 to 9, wherein
the pathway on which the mobile body travels has a plurality of mobile bodies traveling thereon, and
the control unit is configured to estimate the movement destination of one of the mobile bodies assuming that the other mobile bodies will not enter a set region that includes a current position of the one of the mobile bodies for a predetermined period of time.

### [Aspect 11]

The wireless power transfer system according to any one of aspects 1 to 10, wherein
the control unit is configured to determine, based on a charging time point at which a battery provided in the mobile body was previously charged and information indicating a distance that the mobile body has traveled since the charging time point, whether it is necessary to charge the battery of the mobile body.

### [Aspect 12]

The wireless power transfer system according to any one of aspects 1 to 11, wherein
the control unit is configured to:
acquire, from the mobile body, charging information that indicates a charging state of a battery provided in the mobile body, and
determine whether it is necessary to charge the battery of the mobile body based on the charging information.

### [Aspect 13]

The wireless power transfer system according to any one of aspects 1 to 12, wherein
the mobile body is further provided with a selection unit configured to select whether the power reception unit is able to receive power, and
the selection unit is configured to do not cause the power reception unit to receive power when a state of the mobile body does not satisfy a power reception condition set in advance.

### [Aspect 14]

The wireless power transfer system according to aspects 1 to 13, wherein
the power transmission condition include:
(i) the distance of the power transmission coil relative to the power reception coil of the mobile body is less than or equal to the threshold value, or
(ii) the power transmission group is another power transmission group that is adjacent to the power transmission unit group satisfying that the distance of the power transmission coil relative to the power reception coil of the mobile body is less than or equal to the threshold value.

### [Aspect 15]

The wireless power transfer system according to any one of aspects 1 or 14, wherein
the control unit is configured to determine the position of the mobile body based on a change in an amount of current flowing from the power conversion unit to each of the power transmission unit groups.

### [Aspect 16]

The wireless power transfer system according to aspect 15, wherein
each of the power transmission coils is provided with a current sensor that detects an amount of current flowing into the power transmission coil, or a voltage sensor that detects a voltage that is applied to the power transmission coil, and
the control unit is configured to determine the position of the mobile body based on a detection value of the current sensor or the voltage sensor.

### [Aspect 17]

The wireless power transfer system according to any one of aspects 1 to 16, wherein
the control unit is configured to transmit, to the control unit provided in another wireless power transfer system, information indicating whether the mobile body is in an area in which a power transmission unit group serving as a control target among the one or more power transmission unit groups is installed.

### [Aspect 18]

The wireless power transfer system according to any one of aspects 1 or 17, wherein
the control unit is configured to, when it is detected that a device that outputs a prohibition signal that indicates power transmission is prohibited within a predetermined region from a power transmission unit group among the one or more power transmission unit groups, do not cause power to be supplied from the power conversion unit to the power transmission unit group.

### [Aspect 19]

The wireless power transfer system according to any one of aspects 1 to 18, wherein
the one or more power transmission unit groups is a plurality of power transmission unit groups, and
the control unit is configured to:
   monitor power that is supplied from the power conversion unit to the plurality of power transmission unit groups in a set period of time,
   and when a total power in the set period of time exceeds a predetermined reference value, control the power conversion unit such that a supply of power to a portion of the power transmission unit groups among the plurality of power transmission unit groups is restricted.

### [Aspect 20]

The wireless power transfer system according to aspect 19, wherein
the portion of the power transmission unit groups to which the supply of power is restricted are the power transmission unit groups in which a distance to the mobile body is greater than or equal to a predetermined distance.

### [Aspect 21]

The wireless power transfer system according to aspect 19 or 20, wherein
the control unit is configured to control the power conversion unit such that a supply of power is stopped to the power transmission unit groups until the total power becomes less than or equal to the reference value.

### [Aspect 22]

The wireless power transfer system according to any one of aspects 19 to 21, wherein
the control unit is configured to:
continue to increase the number of the power transmission unit groups subjected to a restriction of a supply of power until the total power becomes less than or equal to the reference value, and
stop increasing the number of the power transmission unit groups subjected to a restriction of a supply of power when the total power becomes less than or equal to the reference value.

### [Aspect 23]

A wireless power transfer apparatus (10) that supplies power to a mobile body (200) provided with a power reception unit (210) including a power reception coil (211), the wireless power transfer system comprising:
a power conversion unit (120) configured to generate power to be transmitted to the power reception coil;
one or more power transmission unit groups (G1) that are each constituted by two or more power transmission units (110), each of the power transmission units having a power transmission circuit including a power transmission coil (111), and each of the power transmission units receiving a supply of power from the power conversion unit and transmitting power from the power transmission coil to the power reception coil;
a control unit (130) configured to control the supply of power from the power conversion unit to the one or more power transmission unit groups; and
one or more position detection units (80) configured to detect a position of the mobile body; wherein
the control unit is configured to, based on position information indicating the position of the mobile body detected by the one or more position detection units,
   cause power to be supplied from the power conversion unit to a power transmission unit group that satisfies a power transmission condition among the one or more power transmission unit groups, the power transmission condition including that a distance of the power transmission coil relative to the power reception coil of the mobile body is less than or equal to a predetermined threshold value, and
   not cause power to be supplied from the power conversion unit to a power transmission unit group that does not satisfy the power transmission condition among the one or more power transmission unit groups.

## Claims

1. A wireless power transfer system (10) that supplies power to a mobile body (200) provided with a power reception unit (210) including a power reception coil (211), the wireless power transfer system comprising:
a power conversion unit (120) configured to generate power to be transmitted to the power reception coil;
one or more power transmission unit groups (G1) that are each constituted by two or more power transmission units (110), each of the power transmission units having a power transmission circuit including a power transmission coil (111), and each of the power transmission units receiving a supply of power from the power conversion unit and transmitting power from the power transmission coil to the power reception coil;
a control unit (130) configured to control the supply of power from the power conversion unit to the one or more power transmission unit groups; and
one or more position detection units (80) configured to detect a position of the mobile body; wherein
the control unit is configured to, based on position information indicating the position of the mobile body detected by the one or more position detection units,
cause power to be supplied from the power conversion unit to a power transmission unit group that satisfies a power transmission condition among the one or more power transmission unit groups, the power transmission condition including that a distance of the power transmission coil relative to the power reception coil of the mobile body is less than or equal to a predetermined threshold value, and
not cause power to be supplied from the power conversion unit to a power transmission unit group that does not satisfy the power transmission condition among the one or more power transmission unit groups.

2. The wireless power transfer system according to claim 1, wherein
the control unit is configured to:
supply power to the power reception unit by controlling an impedance of the power transmission circuit having the power transmission coil that is opposing the power reception coil to be smaller than an impedance of the power transmission circuit having the power transmission coil that is not opposing the power reception coil, and
stop power from being supplied to the power reception unit by controlling an impedance of the power transmission circuit having the power transmission coil that is not opposing the power reception coil to be larger than an impedance of the power transmission circuit having the power transmission coil that is opposing the power reception coil.

3. The wireless power transfer system according to claim 1 or 2, wherein
the one or more position detection units include a first position detector provided in the mobile body that detects the position of the mobile body, and
the control unit is configured to acquire, from the first position detector, as the position information, information indicating the position of the mobile body that has been detected by the first position detector.

4. The wireless power transfer system according to claim 3, wherein
the one or more position detection units include a second position detector provided outside the mobile body that detects the position of the mobile body, and
the control unit is configured to acquire, from the second position detector, as the position information, information indicating the position of the mobile body that has been detected by the second position detector.

5. The wireless power transfer system according to claim 1 or 2, wherein
the one or more position detection units include a second position detector provided outside the mobile body that detects the position of the mobile body, and
the control unit is configured to acquire, from the second position detector, as the position information, information indicating the position of the mobile body that has been detected by the second position detector.

6. The wireless power transfer system according to claim 1 or 2, wherein
the one or more power transmission unit groups are a plurality of power transmission unit groups that are installed on a pathway on which the mobile body travels,
the power conversion unit is set so as to supply or stop a supply of power to each of the power transmission unit groups, and
the control unit is configured to:
estimate a movement destination of the mobile body,
specify a power transmission unit group installed at the movement destination among the plurality of power transmission unit groups, and
control the power conversion unit to cause a current to flow to the specified power transmission unit group before the mobile body enters an area in which the specified power transmission unit group is installed.

7. The wireless power transfer system according to claim 6, wherein
the control unit is configured to:
acquire, from the mobile body, speed information indicating a speed of the mobile body or acceleration information indicating an acceleration of the mobile body, and
estimate the movement destination from the speed indicated by the speed information or the acceleration indicated by the acceleration information.

8. The wireless power transfer system according to claim 6, further comprising
a first storage unit configured to store travel plan information of the mobile body that has been determined in advance, wherein
the control unit is configured to estimate the movement destination based on the travel plan information.

9. The wireless power transfer system according to claim 6, further comprising
a second storage unit configured to store power transfer plan information of the mobile body that has been determined in advance, wherein
the control unit is configured to estimate the movement destination of the mobile body based on the power transfer plan information.

10. The wireless power transfer system according to claim 6, wherein
the pathway on which the mobile body travels has a plurality of mobile bodies traveling thereon, and
the control unit is configured to estimate the movement destination of one of the mobile bodies assuming that the other mobile bodies will not enter a set region that includes a current position of the one of the mobile bodies for a predetermined period of time.

11. The wireless power transfer system according to claim 1 or 2, wherein
the control unit is configured to determine, based on a charging time point at which a battery provided in the mobile body was previously charged and information indicating a distance that the mobile body has traveled since the charging time point, whether it is necessary to charge the battery of the mobile body.

12. The wireless power transfer system according to claim 1 or 2, wherein
the control unit is configured to:
acquire, from the mobile body, charging information that indicates a charging state of a battery provided in the mobile body, and
determine whether it is necessary to charge the battery of the mobile body based on the charging information.

13. The wireless power transfer system according to claim 1 or 2, wherein
the mobile body is further provided with a selection unit configured to select whether the power reception unit is able to receive power, and
the selection unit is configured to do not cause the power reception unit to receive power when a state of the mobile body does not satisfy a power reception condition set in advance.

14. The wireless power transfer system according to claim 1 or 2, wherein
the power transmission condition include:
(i) the distance of the power transmission coil relative to the power reception coil of the mobile body is less than or equal to the threshold value, or
(ii) the power transmission group is another power transmission group that is adjacent to the power transmission unit group satisfying that the distance of the power transmission coil relative to the power reception coil of the mobile body is less than or equal to the threshold value.

15. The wireless power transfer system according to claim 1 or 2, wherein
the control unit is configured to determine the position of the mobile body based on a change in an amount of current flowing from the power conversion unit to each of the power transmission unit groups.

16. The wireless power transfer system according to claim 1 or 2, wherein
each of the power transmission coils is provided with a current sensor that detects an amount of current flowing into the power transmission coil, or a voltage sensor that detects a voltage that is applied to the power transmission coil, and
the control unit is configured to determine the position of the mobile body based on a detection value of the current sensor or the voltage sensor.

17. The wireless power transfer system according to claim 1 or 2, wherein
the control unit is configured to transmit, to the control unit provided in another wireless power transfer system, information indicating whether the mobile body is in an area in which a power transmission unit group serving as a control target among the one or more power transmission unit groups is installed.

18. The wireless power transfer system according to claim 1 or 2, wherein
the control unit is configured to, when it is detected that a device that outputs a prohibition signal that indicates power transmission is prohibited within a predetermined region from a power transmission unit group among the one or more power transmission unit groups, do not cause power to be supplied from the power conversion unit to the power transmission unit group.

19. The wireless power transfer system according to claim 1, wherein
the one or more power transmission unit groups is a plurality of power transmission unit groups, and
the control unit is configured to:
monitor power that is supplied from the power conversion unit to the plurality of power transmission unit groups in a set period of time,
and when a total power in the set period of time exceeds a predetermined reference value, control the power conversion unit such that a supply of power to a portion of the power transmission unit groups among the plurality of power transmission unit groups is restricted.

20. The wireless power transfer system according to claim 19, wherein
the portion of the power transmission unit groups to which the supply of power is restricted are the power transmission unit groups in which a distance to the mobile body is greater than or equal to a predetermined distance.

21. The wireless power transfer system according to claim 19 or 20, wherein
the control unit is configured to control the power conversion unit such that a supply of power is stopped to the power transmission unit groups until the total power becomes less than or equal to the reference value.

22. The wireless power transfer system according to claim 21, wherein
the control unit is configured to:
continue to increase the number of the power transmission unit groups subjected to a restriction of a supply of power until the total power becomes less than or equal to the reference value, and
stop increasing the number of the power transmission unit groups subjected to a restriction of a supply of power when the total power becomes less than or equal to the reference value.

23. A wireless power transfer apparatus (10) that supplies power to a mobile body (200) provided with a power reception unit (210) including a power reception coil (211), the wireless power transfer system comprising:
a power conversion unit (120) configured to generate power to be transmitted to the power reception coil;
one or more power transmission unit groups (G1) that are each constituted by two or more power transmission units (110), each of the power transmission units having a power transmission circuit including a power transmission coil (111), and each of the power transmission units receiving a supply of power from the power conversion unit and transmitting power from the power transmission coil to the power reception coil;
a control unit (130) configured to control the supply of power from the power conversion unit to the one or more power transmission unit groups; and
one or more position detection units (80) configured to detect a position of the mobile body; wherein
the control unit is configured to, based on position information indicating the position of the mobile body detected by the one or more position detection units,
cause power to be supplied from the power conversion unit to a power transmission unit group that satisfies a power transmission condition among the one or more power transmission unit groups, the power transmission condition including that a distance of the power transmission coil relative to the power reception coil of the mobile body is less than or equal to a predetermined threshold value, and
not cause power to be supplied from the power conversion unit to a power transmission unit group that does not satisfy the power transmission condition among the one or more power transmission unit groups.
